# EUROPÄISCHE PATENTSCHRIFT

(11) **EP 2 033 702 B1**
(45) Veröffentlichungstag und Bekanntmachung des Hinweises auf die Patenterteilung: **19.01.2011**
(21) Anmeldenummer: 07115662.4
(22) Anmeldetag: 04.09.2007
(51) Int. Cl.: B01D 53/02, B01D 53/64

(54) **Verfahren zum Entfernen von Quecksilber aus Verbrennungsabgasen**
Method for removing mercury from exhaust combustion gases
Procédé destiné à retirer du mercure de gaz de combustion

(43) Veröffentlichungstag der Anmeldung: 11.03.2009
(73) Patentinhaber: Evonik Energy Services GmbH, 45128 Essen (DE)
(72) Erfinder: Winkler, Hermann, Dr., 45665 Recklinghausen (DE)
(74) Vertreter: Zenz

(56) Entgegenhaltungen:
- JP-A- 2006 035 042
- US-A- 5 695 726
- US-A1- 2007 140 940
- US-A1- 2007 167 309
- US-B1- 7 033 419

## Beschreibung

Die vorliegende Erfindung betrifft ein Verfahren zum Entfernen von Quecksilber aus Verbrennungsabgasen.

Abgase aus Verbrennungsanlagen, wie beispielsweise Kraftwerke oder Müllverbrennungsanlagen, enthalten eine Vielzahl von Schadstoffen, die aus den Verbrennungsabgasen entfernt werden müssen, bevor diese an die Umwelt abgegeben werden. Moderne Verbrennungsanlagen sind mit Abgasreinigungsanlagen ausgerüstet, die u.a. in den Verbrennungsabgasen enthaltenes Schwefeldioxid, Stickoxide, Halogenwasserstoffe und mitgeführte Asche entfernen.

Neben den oben genannten Schadstoffen enthalten die Verbrennungsabgase Spuren von Schwermetallen, die aufgrund ihrer Toxizität aus den Verbrennungsabgasen entfernt werden müssen. Ein besonders giftiges, in den Verbrennungsabgasen enthaltenes Schwermetall ist Quecksilber. Dieses wird bei üblichen Rauchgas-Entschwefelungsanlagen (REA) aus den Verbrennungsabgasen gewaschen und gelangt mit dem Abwasser der Rauchgas-Entschwefelungsanlagen in die Abwasseranlage. In der Abwasseranlage wird das in dem Abwasser gelöste Quecksilber in schwerlöslicher Form zusammen mit anderen Feststoffen als RAA-Schlamm ausgefällt. Aufgrund der Kontaminierung mit Quecksilber kann dieser RAA-Schlamm jedoch nicht verbrannt werden, sondern muss als Sondermüll entsorgt werden.

JP2006035042 offenbart ein Verfahren zum Entfernen von Quecksilber aus Verbrennungsabgasen, wobei diese mit einer Absorptionslösung und einem in einem Festbett angeordneten Adsorptionsmittel kontaktiert werden. Dabei wird das im Festbett adsorbierte Quecksilber durch Spülung mit einer wässrigen Lösung wieder entfernt.

Aus der EP 0 792 186 B1 ist ein Verfahren zum Reinigen von Verbrennungsabgasen bekannt, mit dem Quecksilber aus Verbrennungsabgasen entfernt werden kann. Dazu werden die Verbrennungsabgase einer Nasswäsche unterzogen, wobei diese Nasswäsche unter Zugabe von Aktivkohlepartikeln durchgeführt wird, die Schwermetalle, und insbesondere Quecksilber, adsorbieren. Anschließend werden die Aktivkohlepartikel aus der bei der Nasswäsche entstehenden Suspension abgetrennt und in die Nasswäsche rezirkuliert, wobei ein Teil der Partikel abgezweigt wird und thermisch desorbiert wird. Die thermische Desorption ist anlagentechnisch aufwendig und damit kostenintensiv.

Der Erfindung liegt daher die Aufgabe zugrunde, ein einfaches und kostengünstiges Verfahren zum Entfernen von Quecksilber aus Verbrennungsabgasen bereitzustellen.

Die Aufgabe wird gelöst durch ein Verfahren, bei dem zunächst in den Verbrennungsabgasen enthaltenes Quecksilber mit einem Adsorptionsmittel in Kontakt gebracht wird, wobei das Quecksilber von dem Adsorptionsmittel weitgehend adsorbiert wird. Im Rahmen dieser Anmeldung umfasst die Verwendung des Begriffs "Quecksilber" Quecksilber in den Oxidationsstufen 0, 1 und 2.

Bei dem erfindungsgemäßen Verfahren kann das Adsorptionsmittel beispielsweise in Form von feinen Partikeln in die Verbrennungsabgase geblasen werden. In einem solchen Fall wird das Quecksilber von dem Adsorptionsmittel weitgehend direkt aus den Verbrennungsabgasen adsorbiert. Das Adsorptionsmittel kann ferner bei einem Nassarbeitsschritt, wie beispielsweise dem Entschwefeln, zugefügt werden. In diesem Fall geht das in den Verbrennungsabgasen enthaltene Quecksilber zunächst zum Teil in Lösung und wird aus dieser von dem Adsorptionsmittel weitgehend adsorbiert. Es ist auch möglich, die Adsorption aus der Gasphase und aus Flüssigkeit zu kombinieren, indem das Adsorptionsmittel stromauf eines Nassarbeitsschritts in die Verbrennungsabgase eingeleitet wird.

Als Adsorptionsmittel können die gängigen Adsorptionsmittel, wie beispielsweise Bentonit, Kieselgel und Aktivkohle, verwendet werden.

Das Adsorptionsmittel wird nach der Adsorption von den Verbrennungsabgasen getrennt. Eine derartige Trennung kann mit allen dem Fachmann bekannten Vorrichtungen durchgeführt werden.

Nachdem das mit Quecksilber beladene Adsorptionsmittel von den Verbrennungsabgasen getrennt wurde, wird es mit einer ein Oxidationsmittel enthaltenden wässrigen Lösung in Kontakt gebracht.

Es hat sich nun überraschenderweise gezeigt, dass mit einer solchen Behandlung des Adsorptionsmittels das Quecksilber fast quantitativ wieder von diesem entfernt werden kann und als Hg²⁺ in die wässrige Lösung übergeht. Eine Erwärmung der wässrigen Lösung ist dabei nicht notwendig, wodurch dieser Arbeitsschritt sehr kostengünstig realisiert werden kann.

Das vorliegende Verfahren ist dabei auf kein bestimmtes Oxidationsmittel beschränkt. Beispielsweise können Hypochlorit, Chlordioxid oder Chlorgas verwendet werden. Es ist auch möglich, das Quecksilber durch katalytische Oxidation mit Luft, ggf. in der Gegenwart von einem Cu²⁺-Salz, von dem Adsorptionsmittel zu lösen. Besonders bevorzugt ist die Verwendung von Hypochlorit, da dieses, im Vergleich zu gasförmigen Oxidationsmitteln, einfach zu handhaben ist und in größeren Mengen preisgünstig verfügbar ist. Es hat sich ferner gezeigt, dass bei Verwendung von Hypochlorit nur eine kurze Verweilzeit des Adsorptionsmittels in der wässrigen Lösung notwendig ist, um das Quecksilber von dem Adsorptionsmittel zu lösen.

Da bestimmte Oxidationsmittel nur in bestimmten pH-Bereichen arbeiten, kann man durch entsprechende Wahl des Oxidationsmittels bereits bei diesem Schritt des Verfahrens einen pH-Bereich einstellen, der für nachfolgende Arbeitsschritte am günstigsten ist.

Nachdem das Quecksilber von dem Adsorptionsmittel gelöst wurde, wird die Hg²⁺-haltige Lösung von dem Adsorptionsmittel und ggf. vorhandenen weiteren Feststoffen getrennt. Der Quecksilbergehalt des Adsorptionsmittels sowie ggf. vorhandener weiterer Feststoffe ist nun so gering, dass diese beispielsweise verbrannt werden können.

Nach Abtrennung des Adsorptionsmittels wird das Quecksilber aus der Lösung entfernt. Die Entfernung des Quecksilbers aus der Lösung kann mit jedem dem Fachmann bekannten Verfahren durchgeführt werden.

Das erfindungsgemäße Verfahren weist mehrere Vorteile gegenüber bekannten Verfahren auf. Zum einen ist das bei der Behandlung der Verbrennungsabgase entstehende Abwasser, beispielsweise aus einem REA-Wäscher, nur noch in sehr geringem Maße mit Quecksilber verunreinigt, da durch die Zugabe des Adsorptionsmittels das Quecksilber auf dieses übergeht. Dies bedingt, das in einer nachgeschalteten Abwasseranlage anfallender RAA-Schlamm nicht mit Quecksilber kontaminiert ist, und dieser daher nicht als Sondermüll entsorgt werden muss, sondern verbrannt werden kann. Ferner kann das Quecksilber auf eine anlagentechnisch einfache und somit kostengünstige Art und Weise wieder mit einer ein Oxidationsmittel aufweisenden Lösung von dem Adsorptionsmittel getrennt werden und kann nach dieser Trennung mit einem bekannten Verfahren aus der Lösung entfernt werden.

Besonders kostengünstig und anlagentechnisch unkompliziert kann das Hg²⁺ aus der Lösung entfernt werden, indem die Hg²⁺-haltige Lösung mit einem Fällungsmittel versetzt wird, das mit Hg²⁺ einen schwerlöslichen Niederschlag bildet, und dieser von der Lösung abgetrennt wird. Als Fällungsmittel sind Sulfide, und insbesondere Organosulfide bevorzugt. Das sich bei der Umsetzung mit dem Fällungsmittel bildende Quecksilbersulfid ist über einen weiten pH-Bereich beständig und kann als Pigment weiterverarbeitet werden. Vorteilhaft ist ferner, dass Quecksilbersulfid in Wasser praktisch unlöslich ist und damit als ungiftig einzustufen ist. Die Verwendung von Organosulfiden ist besonders bevorzugt, da diese mit dem Quecksilber im Vergleich zu reinem Quecksilbersulfid "größere" Organoquecksilbersulfid-Moleküle bilden, die leichter aus der entsprechende Lösung ausfallen. Je geringer der Quecksilbergehalt der Rauchgase ist, desto eher empfiehlt sich die Verwendung von Organosulfiden, um so einen möglichst geringen Quecksilbergehalt des gereinigten Abwassers zu ermöglichen.

Alternativ kann das Hg²⁺ aus der Lösung entfernt werden, indem die Lösung mit einem Ionenaustauscher in Kontakt gebracht wird. Auch diese Art der Entfernung des Quecksilbers aus der Lösung ist anlagentechnisch einfach zu realisieren. Als Ionentauscherharze können verschiedene IMAC™-Varianten oder 1,3,5-Triazin-2,4,6-trithiol verwenden. Das erfindungsgemäße Verfahren ist jedoch nicht auf diese Harze beschränkt. Besonders bevorzugt sind Ionenaustauscherharze mit funktionellen H-S-Gruppen, da mit diesen eine besonders effiziente Entfernung des Quecksilbers aus der Lösung möglich ist.

In bevorzugter Weiterbildung der Erfindung wird in den Verbrennungsabgasen enthaltenes Hg⁰ oxidiert, und zwar vor dem in Kontakt bringen von in den Verbrennungsabgasen enthaltenem Quecksilber mit dem Adsorptionsmittel. Da die Adsorptionsmittel bevorzugt Hg²⁺ adsorbieren, kann durch eine Oxidation von in den Verbrennungsabgasen enthaltenem Hg⁰ die Hg-Konzentration in dem gereinigten Verbrennungsabgasen weiter gesenkt werden. Eine solche Oxidation ist jedoch nur dann notwendig und sinnvoll, wenn der Hg⁰-Gehalt der Verbrennungsabgase zu hoch ist. Die Oxidation des Hg⁰ kann beispielsweise durch Katalysatoren oder Halogene erfolgen, jedoch sind auch andere dem Fachmann bekannte Verfahrensschritte zur Oxidation des Hg⁰ vorstellbar.

Bei dem Reinigen der Verbrennungsabgase werden diese u.a. entschwefelt. Diese Entschwefelung findet in sogenannten REA-Wäschern statt, in welchen das in den Verbrennungsabgasen enthaltene Schwefeldioxid in Gegenwart eines Oxidationsmittels zu einem Sulfat umgesetzt wird. Das Sulfat wird abgetrennt und - je nach Entschwefelungsverfahren - weiterverarbeitet oder deponiert. Diesen Abtrennungsschritt kann man auch zur Abtrennung des Adsorptionsmittels von anderen Feststoffen nutzen, indem das Adsorptionsmittel vor oder in dem REA-Wäscher den Verbrennungsabgasen zugeführt wird. Auf diese Weise kann die Abtrennung des Sulfats mit der Abtrennung des Adsorptionsmittels kombiniert werden, was den anlagentechnischen Mehraufwand und damit die Kosten senkt. Besonders einfach lässt sich diese Abtrennung realisieren, indem die in dem REA-Wäscher entstehenden Feststoffe durch Fliehkraftabscheidung von dem Adsorptionsmittel getrennt werden. Bei einer solchen Trennung entstehen zwei Phasen. Zum einen das schwere kristalline Calciumsulfat, und zum anderen eine Abwassersuspension, die unter anderem das Adsorptionsmittel und weitere Feststoffe, insbesondere Metallhydroxide, enthält. Nachdem der Gips abgetrennt wurde, wird das Adsorptionsmittel, zusammen mit den anderen Feststoffen, von dem Abwasser getrennt.

Da Aktivkohle eine besonders große aktive Oberfläche aufweist und daher nur in sehr geringen Mengen den Verbrennungsabgasen zugesetzt werden muss, wird als Adsorptionsmittel vorzugsweise Aktivkohle verwendet. Die Verwendung von Aktivkohle hat ferner den Vorteil, dass diese bei dem nachfolgenden Arbeitsschritt einfach abgetrennt werden kann. Ferner kann die Aktivkohle nach dem in Kontakt bringen mit einer ein Oxidationsmittel enthaltenden Lösung mit anderen abzutrennenden Feststoffen problemlos verbrannt werden kann.

Besonders vorteilhaft ist die Verwendung von aus Torf gewonnener Aktivkohle, da diese, verglichen mit anderen Arten von Aktivkohle, über eine größere innere Oberfläche verfügt.

Bei Verbrennungsanlagen, in denen große Mengen Verbrennungsabgase entstehen, beispielsweise in Kraftwerken, ist es vorteilhaft, dass das Adsorptionsmittel nach dem in Kontakt bringen mit einer ein Oxidationsmittel enthaltenden Lösung abgetrennt und rezirkuliert wird. Auf diese Weise lassen sich die Anschaffungskosten für das Adsorptionsmittel senken und die bei einer Verbrennung des Adsorptionsmittels entstehenden Umweltbelastungen werden vermieden.

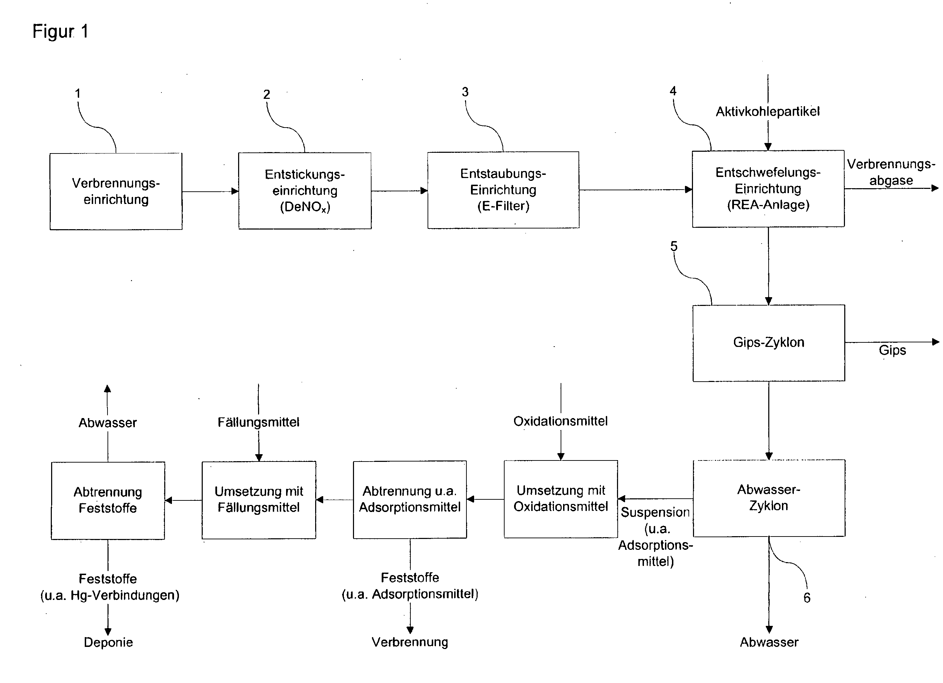

Nachfolgend wird die Erfindung anhand eines bevorzugten Ausführungsbeispiels des erfindungsgemäßen Verfahrens in Verbindung mit der beiliegenden Zeichnung näher erläutert. Die Zeichnung zeigt ein Ablaufschema eines Ausführungsbeispiels des erfindungsgemäßen Verfahrens.

Das in dem Ablaufschema gezeigte Ausführungsbeispiel des erfindungsgemäßen Verfahrens betrifft eine Verbrennungsabgasreinigung für einen 500MW-Block eines Kraftwerks.

Von der Verbrennungseinrichtung (1) gelangen die Verbrennungsabgase zur Entstickungseinrichtung (2), mit welcher die Stickoxide aus den Verbrennungsabgasen entfernt werden. Die Entstickungseinrichtung kann gemäß einem dem Fachmann bekannten Verfahren, wie beispielsweise der selektiven nichtkatalytischen oder katalytischen Entstickung, betrieben werden.

Die entstickten Abgase gelangen in eine Entstaubungsanlage (3), in welcher Flugstaub aus den Verbrennungsabgasen entfernt wird. Bei Kraftwerken wird zur Entstaubung der Verbrennungsabgase zumeist ein Elektrofilter verwendet.

Nach welchem Verfahren genau die Entstickung und die Entstaubung vorgenommen werden, hat jedoch auf die vorliegende Erfindung keinen Einfluss - diese beiden Arbeitsschritte sind lediglich der Vollständigkeit halber dargestellt.

Nach der Entstaubung der Verbrennungsabgase gelangen diese in die Entschwefelungsanlage bzw. den REA-Wäscher (4). Bei dem hier gezeigten Ausführungsbeispiel des erfindungsgemäßen Verfahrens wird das in den Verbrennungsabgasen vorhandene Schwefeldioxid mit einem Sprühadsorptionsverfahren entfernt, bei welchem eine basische Kalkhydratsuspension in die zu reinigenden Verbrennungsabgase eingesprüht wird. Das bei der Umsetzung mit Schwefeldioxid entstehende CaSO₃ wird beispielsweise mit Luftsauerstoff zur CaSO₄ aufoxidiert. Bei dieser Oxidation wird auch ggf. noch in den Verbrennungsabgasen vorhandenes Hg¹⁺ zu Hg²⁺ oxidiert. Bei alternativen Ausführungsbeispielen können andere Entschwefelungsverfahren verwendet werden - beispielsweise die Entschwefelung mit Ammoniak.

In den sogenannten Sumpf des REA-Wäschers (4) werden Aktivkohlepartikel als Adsorptionsmittel gegeben. Die Aktivkohlepartikel adsorbieren das von den Verbrennungsabgasen in die REA-Wäscherlösung übergegangene Hg²⁺. Bei alternativen Ausführungsbeispielen ist es beispielsweise denkbar, feine Aktivkohlepartikel stromauf des REA-Wäschers in die Verbrennungsgase einzublasen. In einem solchen Fall wird ein Teil des in den Verbrennungsabgasen vorliegenden Quecksilbers von den Aktivkohlepartikeln bereits aus den Verbrennungsabgasen selber adsorbiert. Das nicht adsorbierte Quecksilber geht in dem REA-Wäscher in Lösung und wird dort von den Aktivkohlepartikeln adsorbiert.

Bei einer Verbrennungsanlage mit 500MW entstehen pro Stunde etwa 1,5 Mio. m³ Verbrennungsabgase. Bei einem Quecksilbergehalt von < 0,50 mg pro Kilo Kohle müssen pro Stunde lediglich etwa 4 kg Aktivkohle zugeführt werden. In dem REA-Wäscher liegt die Konzentration der Aktivkohlepartikel bei einer solchen Zugabe bei ungefähr 100 mg/l.

Die in dem REA-Wäscher entstehende Suspension, die unter anderem Gips, weitere Feststoffe sowie Aktivkohlepartikel enthält, wird in einen Gips-Zyklon (5) geführt, welcher die in dem REA-Wäscher entstandene Suspension in zwei Phasen trennt, nämlich in das schwere kristalline CaSO₄ sowie eine Suspension, die die leichten Aktivkohlepartikel sowie weitere amorphe und somit leichte Feststoffe, wie beispielsweise Staub und Metallhydroxide, enthält. Der Gipsweißgrad wird durch die Hinzufügung von Aktivkohle nur unwesentlich vermindert, und zwar von ungefähr 74% auf 72%.

Die den Gips-Zyklon (5) verlassende Suspension wird in einen Abwasser-Zyklon (6) geführt. In diesem Abwasser-Zyklon (6) wird ein Teil des Abwassers von der Suspension abgetrennt und man erhält eine Suspension mit einem höheren Feststoffanteil. Gegenüber der Suspension aus dem Gips-Zyklon (5) ist das Volumen dieser Suspension aus dem Abwasser-Zyklon (6) stark vermindert, so dass nachfolgende Verfahrensschritte anlagentechnisch weniger aufwendig gestaltet werden können.

Das den Abwasser-Zyklon (6) verlassende Abwasser weist eine Quecksilberkonzentration von nur noch ungefähr 10 µg/l auf. Das Abwasser wird zum Teil in das Verfahren rezirkuliert, oder es wird einer Abwasseranlage zugeführt. Aufgrund des geringen Quecksilbergehaltes kann der in der Abwasseranlage entstehende RAA-Schlamm verbrannt werden - eine Deponierung ist nicht mehr erforderlich.

Das erfindungsgemäße Verfahren ist jedoch nicht auf die bei diesem Ausführungsbeispiel dargestellte Trennung der Aktivkohle sowie anderer Feststoffe von dem Abwasser bzw. den Verbrennungsgasen beschränkt. Neben der Verwendung eines Gips-Zyklons und eines Abwasser-Zyklons kann die Abtrennung auch mit anderen, dem Fachmann bekannten Trennmethoden erfolgen. Das obige Trennverfahren ist jedoch bevorzugt, da es eine Trennung in Gips, Abwasser sowie eine feststoffhaltige Suspension mit einfachen Mitteln ermöglicht.

Bei einem nachfolgenden Verfahrensschritt wird in die Suspension aus dem Abwasser-Zyklon (6), die die Aktivkohlepartikel und weitere Feststoffen enthält, eine wässrige Natriumhypochloritlösung mit einem pH-Wert von ca. 6,5 eingeleitet. Pro Liter Suspension werden 1 - 4 ml einer ca. 13%-igen Natriumhypochloritlösung eingeleitet. Um ein Absetzen der Feststoffe bereits zu diesem Zeitpunkt zu verhindern, wird die Lösung mit einer geeigneten Rühreinrichtung durchmischt. Bei alternativen Ausführungsbeispielen können selbstverständlich andere Oxidationsmittel in einem anderen pH-Bereich verwendet werden. Während der Behandlung mit dem Oxidationsmittel löst sich das Quecksilber wieder von der Aktivkohle und geht als Hg²⁺ in Lösung.

Nachdem das Quecksilber vollständig in Lösung gegangen ist, was von der jeweils verwendeten Aktivkohle sowie der Konzentration des Oxidationsmittels sowie der Temperatur abhängt, wird die Lösung mit einem Flockungshilfsmittel und/oder einem Flockungsmittel sowie, zur Erhöhung des pH-Wertes der Lösung, mit Ca(OH)₂ versetzt. Die Lösung wird dabei auf einen pH-Wert von ungefähr 8,5 eingestellt. Die Erhöhung des pH-Wertes geschieht zum einen aufgrund von gesetzlichen Vorgaben, die besagen, dass Abwässer einer Abwasserreinigungsanlage einen in einem gewissen pH-Wertfenster liegenden pH-Wert aufweisen müssen, und zum anderen, um für eine Gips-Entsättigung der Lösung zu sorgen. Dies bedeutet, dass bei Zugabe des Ca(OH)₂ weiteres Calciumsulfat aus der Lösung ausfällt. Ferner fallen bei Erhöhung des pH-Wertes weitere Metallhydroxide, wie beispielsweise Nickel- und Kupferhydroxid, aus der Lösung aus.

Unter Flockungsmitteln versteht man Stoffe, die Teilchen in einer Suspension derart beeinflussen, dass diese zu Flocken (Mikroflocken) aggregieren und daher aus der Suspension entfernt werden können. Als Flockungsmittel wird im vorliegenden Ausführungsbeispiel vorzugsweise Eisen(III)chlorid, Eisen(III)sulfat oder eine Mischung dieser Salze verwendet. Welches dieser Salze eingesetzt wird, hängt von der momentanen Verfügbarkeit ab. Bei Zugabe dieser Salze entsteht ein voluminöser Fe(OH)₃-Niederschlag, der sich mit anderen weniger voluminösen Feststoffen zusammenballt. Um die Absetzgeschwindigkeit der aggregierten Teilchen zu beschleunigen und eine Abtrennung dieser zu vereinfachen, kann ein sogenanntes Flokkungshilfsmittel zugesetzt werden, welches die Zusammenballung von Feststoffpartikeln zu größeren Einheiten (Makroflocken) bewirkt, die sich aufgrund ihrer größeren Masse schneller absetzen können und einfacher abgetrennt werden können. Als Flockungshilfsmittel werden im vorliegenden Ausführungsbeispiel bevorzugt anionische Polymere zugesetzt. Ob und im welchem Umfang ein Flockungsmittel bzw. ein Flockungshilfsmittel zugesetzt wird, hängt von der Zusammensetzung der Suspension und somit von der Verfahrensführung sowie der Zusammensetzung der Verbrennungsabgase ab.

Die nach der obigen Behandlung in der Suspension enthaltenen Feststoffe, die nun weitgehend quecksilberfrei sind, werden nachfolgend in einer Filterpresse von der quecksilberhaltigen Lösung getrennt. Bei dem hier beschriebenen Ausführungsbeispiel fallen pro Tag etwa 20 Tonnen Feststoffe an, bei denen der Quecksilbergehalt unter 10g/t liegt. Aufgrund dieses geringen Quecksilbergehalts können die Feststoffe verbrannt werden und es entstehen somit keine Kosten für eine Deponierung. Bei einem anderen Ausführungsbeispiel können die Feststoffe auch durch Sedimentation oder Flotation abgetrennt werden.

Zur Ausfällung des Quecksilbers wird die quecksilberhaltige Lösung wird mit einem Organosulfid, einem Flockungsmittel und einem Flockungshilfsmittel versetzt. Als Flockungsmittel wird vorzugsweise Eisen(III)chlorid eingesetzt, da dieses preisgünstig zu beziehen ist. Als Organosulfid wird vorzugsweise ein oxidationsbeständiges Organosulfid zugesetzt, da die Lösung ein hohes Oxidationspotential aufweisen kann. Um bereits zu diesem Zeitpunkt ein Absetzen des Organoquecksilbersulfids zu vermeiden, wird die Lösung in diesem Stadium mit einer geeigneten Rühreinrichtung durchmischt.

Nachdem das Quecksilber als Organoquecksilbersulfid ausgefällt wurde, werden die Feststoffe über eine Membranfilterpresse abgetrennt und deponiert. Bei dem hier beschriebenen Ausführungsbeispiel fallen so pro Tag etwa 0,2 t Organoquecksilbersulfid-haltige Abfälle an.

## Patentansprüche

1. Verfahren zum Entfernen von Quecksilber aus Verbrennungsabgasen, aufweisend die Schritte:
a) Einleiten der Verbrennungsabgase in einen REA-Wäscher, in welchem das in den Verbrennungsabgasen enthaltene Quecksilber in die REA-Wäscherlösung übergeht, und Zuführen eines Adsorptionsmittels in den Sumpf des REA-Wäschers, wobei das Adsorptionsmittel in die REA-Wäscherlösung übergegangenes Hg²⁺ adsorbiert,
b) Trennen der in dem REA-Wäscher entstandenen Suspension in zwei Phasen, wobei eine Phase zumindest das Adsorptionsmittel aufweist,
c) in Kontakt bringen der das Adsorptionsmittel enthaltenen Phase mit einer ein Oxidationsmittel enthaltenden wässrigen Lösung, wodurch das adsorbierte Quecksilber als Hg²⁺ in Lösung geht,
d) Trennen der Hg²⁺-haltigen Lösung von dem Adsorptionsmittel, und
e) Entfernen des Hg²⁺ aus der Lösung.

2. Verfahren nach Anspruch 1, **dadurch gekennzeichnet, dass** das Hg²⁺ aus der Lösung entfernt wird, indem die Hg²⁺-haltige Lösung mit einem Fällungsmittel versetzt wird, das mit Hg²⁺ einen schwerlöslichen Niederschlag bildet, und dieser von der Lösung abgetrennt wird.

3. Verfahren nach Anspruch 2, **dadurch gekennzeichnet, dass** als Fällungsmittel ein Organosulfid verwendet wird.

4. Verfahren nach Anspruch 1, **dadurch gekennzeichnet, dass** das Hg²⁺ aus der Lösung entfernt wird, indem die Lösung mit einem Ionenaustauscher in Kontakt gebracht wird.

5. Verfahren einem der Ansprüche 1 bis 4, **dadurch gekennzeichnet, dass** in den Verbrennungsabgasen enthaltenes Hg⁰ vor dem in Kontakt bringen von in den Verbrennungsabgasen enthaltenem Quecksilber mit dem Adsorptionsmittel oxidiert wird.

6. Verfahren nach einem der Ansprüche 1 bis 5, **dadurch gekennzeichnet, dass** in dem REA-Wäscher entstehende Feststoffe durch Fliehkraftabscheidung von dem Adsorptionsmittel getrennt werden.

7. Verfahren nach einem der Ansprüche 1 bis 6, **dadurch gekennzeichnet, dass** als Oxidationsmittel vorzugsweise Hypochlorit, Chlordioxid oder Chlorgas verwendet wird.

8. Verfahren nach einem der Ansprüche 1 bis 7, **dadurch gekennzeichnet, dass** als Adsorptionsmittel Aktivkohle verwendet wird.

9. Verfahren nach einem der Ansprüche 1 bis 8, **dadurch gekennzeichnet, dass** das Adsorptionsmittel nach dem in Kontakt bringen mit einer ein Oxidationsmittel enthaltenden Lösung abgetrennt und rezirkuliert wird.

## Claims

1. Method of removing mercury from combustion waste gases, comprising the steps:
a) introducing the combustion waste gases into a flue gas desulphurisation plant washer, in which the mercury contained in the combustion waste gases goes over into the flue gas desulphurisation plant solution, and feeding an adsorption medium into the sump of the flue gas desulphurisation plant washer, wherein the adsorption medium adsorbs Hg²⁺ which has gone into the flue gas desulphurisation plant washer solution,
b) separating the suspension which has arisen in the flue gas desulphurisation plant washer into two phases, wherein one phase comprises at least the adsorption medium,
c) bringing the phase containing the adsorption medium into contact with an aqueous solution containing an oxidising agent, whereby the adsorbed mercury goes into solution as Hg²⁺,
d) separating the solution containing Hg²⁺ from the adsorption medium and
e) removing the Hg²⁺ from the solution.

2. Method according to claim 1, **characterised in that** the Hg²⁺ is removed from the solution **in that** the solution containing the Hg²⁺ is mixed with a precipitating agent which forms together with Hg²⁺ a low solubility precipitate and this is separated from the solution.

3. Method according to claim 2, **characterised in that** an organosulphide is used as precipitating agent.

4. Method according to claim 1, **characterised in that** the Hg²⁺ is removed from the solution **in that** the solution is brought into contact with an ion exchanger.

5. Method according to any one of claims 1 to 4, **characterised in that** Hg⁰ contained in the combustion waste gases is oxidised before mercury contained in the combustion waste gases is brought into contact with the adsorption medium.

6. Method according to any one of claims 1 to 5, **characterised in that** solids which arise in the flue gas desulphurisation plant washer are separated from the adsorption medium by centrifugal force separation.

7. Method according to any one of claims 1 to 6, **characterised in that** chlorate, chlorine dioxide or chlorine gas is preferably used as oxidising agent.

8. Method according to any one of claims 1 to 7, **characterised in that** activated carbon is used as adsorption medium.

9. Method according to any one of claims 1 to 8, **characterised in that** the adsorption medium is separated and recirculated after being brought into contact with a solution containing an oxidising agent.

## Revendications

1. Procédé d'élimination du mercure depuis des gaz de sortie de combustion, comprenant les étapes:
a) acheminement des gaz de sortie de combustion dans une colonne de désulfuration dans laquelle le mercure contenu dans les gaz de sortie de combustion passe dans la solution de la colonne de désulfuration, et addition d'un agent adsorbant au fond de la colonne de désulfuration, sachant que l'agent adsorbant adsorbe les Hg²⁺ passés dans la solution de la colonne de désulfuration,
b) séparation de la suspension, produite dans la colonne de désulfuration, en deux phases, une phase comportant au moins l'agent adsorbant,
c) mise en contact de la phase contenant l'agent adsorbant avec une solution aqueuse contenant un agent oxydant, par quoi le mercure adsorbe passe en solution comme Hg²⁺,
d) séparation de la solution contenant Hg²⁺ de l'agent adsorbant et
e) élimination du Hg²⁺ de la solution.

2. Procédé selon la revendication 1, **caractérisé en ce que** le Hg²⁺ est éliminé de la solution **en ce que** la solution contenant Hg²⁺ est additionnée d'un agent de précipitation qui forme avec Hg²⁺ un précipité peu soluble et **en ce que** celui-ci est séparé de la solution.

3. Procédé selon la revendication 2, **caractérisé en ce qu'**un composé organique sulfuré est utilisé comme agent de précipitation.

4. Procédé selon la revendication 1, **caractérisé en ce que** le Hg²⁺ est éliminé de la solution **en ce que** la solution est mise en contact avec un échangeur d'ions.

5. Procédé selon l'une quelconque des revendications 1 à 4, **caractérisé en ce que** le Hg⁰ contenu dans les gaz de sortie de combustion est oxydé avant la mise en contact du mercure contenu dans les gaz de sortie de combustion avec l'agent adsorbant.

6. Procédé selon l'une quelconque des revendications 1 à 5, **caractérisé en ce que** les solides produits dans la colonne de désulfuration sont séparés de l'agent adsorbant par séparation centrifuge.

7. Procédé selon l'une quelconque des revendications 1 à 6, **caractérisé en ce que**, comme oxydants, sont utilisés de préférence de l'hypochlorite, du dioxyde de chlore ou du chlore gazeux.

8. Procédé selon l'une quelconque des revendications 1 à 7, **caractérisé en ce que** du charbon actif est utilisé comme agent adsorbant.

9. Procédé selon l'une quelconque des revendications 1 à 8, **caractérisé en ce qu'**après la mise en contact avec une solution contenant un agent oxydant, l'agent adsorbant est séparé et est remis en circulation.
